# NEW EUROPEAN PATENT SPECIFICATION

(11) **EP 2 397 739 B2**
(45) Date of publication and mention of the opposition decision: **24.02.2016**
(45) Mention of the grant of the patent: 12.12.2012
(21) Application number: 11171164.4
(22) Date of filing: 23.06.2011
(51) Int. Cl.: F16L 19/065, F16L 25/00, F24J 2/46, F28F 9/02

(54) **Coupling for corrugated tube**
Kupplung für Faltenrohr
Couplage de tube ondulé

(30) Priority: 10.02.2011 IT BS20110008 U
(43) Date of publication of application: 21.12.2011
(73) Proprietor: Tiemme Raccorderie S.p.A., 25045 Castegnato (Brescia) (IT)
(72) Inventor: Gnutti, Giuliano, I-25121 BRESCIA (IT)
(74) Representative: Pulieri, Gianluca Antonio

(56) References cited:
- EP-A2- 1 347 227
- EP-A2- 2 278 204
- FR-A1- 2 794 214
- US-A- 3 834 743

## Description

The present invention relates to a coupling for a corrugated tube, that is to say a coupling for connecting a corrugated tube to a utility device, such as a solar panel or tank.

Numerous embodiments of couplings for corrugated tubes exist. Some of these are illustrated in the documents DE 202006013841, DE 202009004737, DE 202010008064, EP 1431645, EP 1983244, EP 915282, EP 1479960, DE 202004005579, DE 102008003675, DE 102007042606 and EP 2133613.

Particularly, EP-1347227A2 and EP-2278204-A2 disclose a coupling comprising a main body with a support seat an assembly seat, a cut ring and a nut to be serewed onto the main body.

Despite such numerous embodiments, there is significant R&D activity in the sector, targeted at developing solutions to improve the performance of the known embodiments; this has been particularly true in recent years on account of the considerable importance acquired by the solar panel installation sector.

In particular, the purpose of the present invention is to make a coupling for a corrugated tube which is particularly easy and efficient to install.

Such purpose is achieved by a coupling for a corrugated tube according to claim 1.

The characteristics and advantages of the coupling according to the present innovation will be evident from the description given below, made by way of a nonlimiting example, according to the appended drawings, wherein:

- figure 1 shows a partial view in longitudinal cross-section of a coupling according to the present innovation, in an initial assembly configuration;

- figure 2 shows the coupling in figure 1, in a final assembly configuration; and

- figure 3 shows an enlargement of the detail III in figure 2;

- figure 4 shows a view, partially in longitudinal cross-section, of a coupling according to the present invention according to a further embodiment, particularly suitable for screwing to the utility device;

- figure 5 shows a view, partially in longitudinal cross-section, of a coupling according to the present invention according to a further embodiment, particularly suitable for connection to corrugated tubes at both ends;

- figure 6 shows a view, partially in longitudinal cross-section, of a coupling according to the present invention according to a further embodiment, particularly suitable for connection to a corrugated tube at one end and a copper pipe at the other end; and

- figure 7 shows a view, partially in longitudinal cross-section, of a coupling according to the present invention, according to a further embodiment, particularly suitable for connection to a corrugated tube at one end and the insertion of the utility device at the other end.

In the following description the term "substantially sharp edged" appears recurrently; such expression is understood to mean an edge deriving from machining structured so as not to include bevels or connections, as far as permitted by the technological limitations of such machining, by the tools utilised therein and materials utilised for the component.

With reference to the appended drawings, reference numeral 1 globally denotes an assembly comprising a corrugated tube 2 and a coupling 4 for the connection of the corrugated tube to a utility device, such as a solar panel or tank.

The corrugated tube 2 has, along a longitudinal axis X, a sequence of corrugations which form an alternate succession of peaks 6 and valleys 8. The tube 2 terminates, at the end engaging with the coupling 4, in a terminal corrugation, having a terminal crest 6'.

Preferably, the corrugated tube is made of metal.

The coupling 4, hollow on the inside for the transit of the fluid, comprises a main body 10, preferably made in a single piece, for example in brass.

From the engagement end with the tube to the opposite end, destined for engagement with the utility device, externally the main body 10 comprises a threaded outer portion 12, a relief groove 14 and a grip head 16, preferably of a polygonal shape, to permit the gripping of a tool, such as a spanner, for fitting the coupling 4 to the utility device.

Internally, from the engagement end with the tube to the end destined for engagement with the utility device, the main body 10 comprises an annular support seat 20, defined on the bottom by a crown-shaped support surface 20', contained on a plane, and an annular assembly seat 22, having a smaller diameter than that of the support seat.

The support seat 20 is defined circumferentially by a cylindrical surface; in the same way the assembly seat 22 is defined circumferentially by a cylindrical surface.

The passage from the support seat 20 to the assembly seat 22 is defined circumferentially by a substantially sharp edge (consisting of the inner diameter of the circular crown defining the support surface 20').

The assembly seat 22 has a circumferentially continuous annular abutment wall 24 on the bottom having a radial extension such as to permit the abutment of the end of the tube and in particular of the terminal corrugation thereof.

On the other side of the abutment wall 24, the main body 10 has an engagement recess 26 defined by an inner threaded portion 28, for screwing to the utility device.

The coupling 4 further comprises a ring 40 preferably made in a single piece, having a longitudinal slit through its thickness and from one end of the other, which confers structural stability.

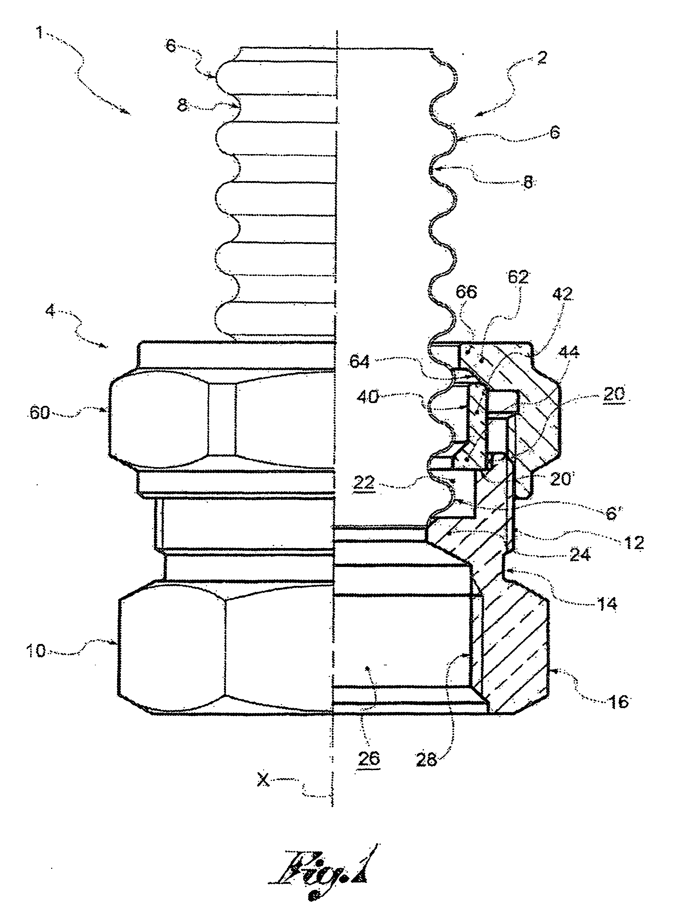

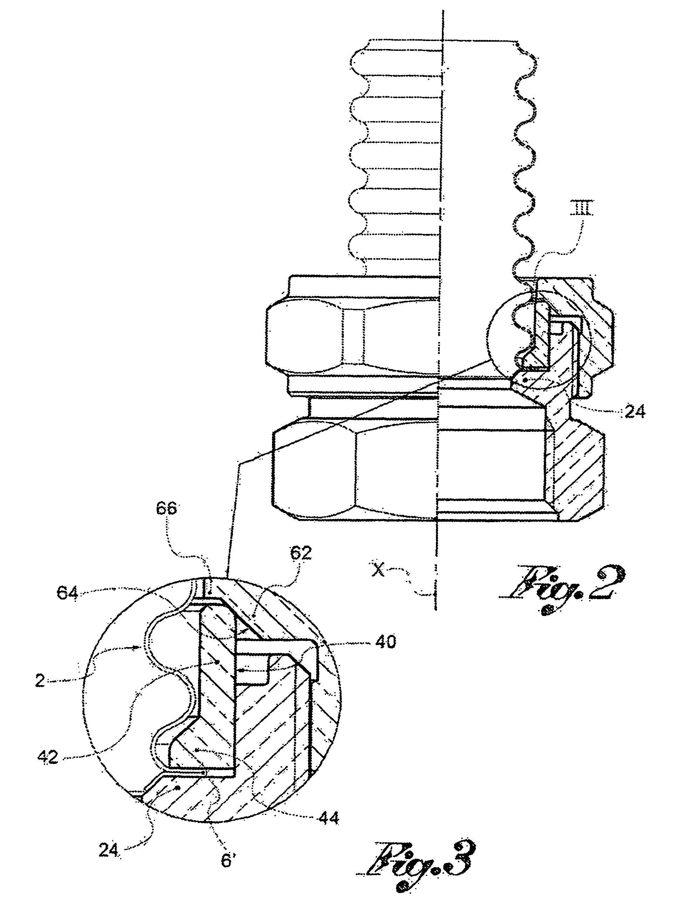

Such structural flexibility permits a deformation of the ring which, in a non-deformed configuration, such as that shown in figure 1, has a larger inner or outer diameter than in a deformed configuration, such as that shown in figure 2.

In particular, the ring 40 comprises a main annular wall 42, having a substantially constant inner and outer diameter, and an annular support foot 44.

The support foot 44 is preferably cylindrical on the outside, ending with a substantially sharp edge and flush with the main wall 42; preferably, moreover, said foot 44 is internally at least partially tapered, converging towards the support wall 20 of the main body 10.

The coupling 4 further comprises a nut 60, which can be screwed onto the inner portion 12 of the main body 10 and fitted internally with an active wall 62 to use for assembly to the ring 40.

In particular, the active wall 62 has a tapered contact surface 64, divergent towards the main body 10.

In addition, preferably, the active wall 62 comprises an annular shoulder 66 of a cylindrical shape in correspondence with the minimum diameter of the contact surface 64, having an inner diameter even smaller than the minimum diameter of the contact surface.

Preferably, the nut 60, is outwardly shaped in a polygonal manner, so as to be gripped by an assembly tool.

In an initial assembly configuration of the tube 2 to the coupling 4 (figure 1), the ring 40 is in the non-deformed configuration and rests against the support surface 20'; in particular the foot 44 of the ring 40 abuts against said support surface 20'.

The nut 60 is partially screwed to the main body 10, so that the ring 40 and in particular the main wall 42 thereof, abuts against the active wall 62 of the nut 60, and in particular against the tapered contact surface 64.

The tube 2 is inserted in the coupling 4 and the end of it abuts with the abutment wall 24 of the main body 10. In particular, the terminal corrugation of the tube, which abuts with the abutment wall 24, is positioned between the foot 44 of the ring 40 and said abutment wall.

Preferably, the minimum inner diameter of the foot 44 of the ring 40 is less than the maximum diameter of the terminal crest 6', so that the tube 2 is snap inserted in the coupling. Advantageously, the at least partially tapered shape of the foot 44 of the ring 40 facilitates the insertion of the terminal crest 6' of the tube and its snap engagement.

Advantageously, in addition, the snap insertion of the corrugated tube in the ring defines the position of the end of the tube in relation to the ring and consequently in relation to the coupling body during assembly, without further intervention by the operator performing assembly.

Moreover, such size of ring prevents the accidental escape of the coupling tube during handling before mechanical tightening.

By screwing the nut 60 to the main body 10, the coupling passes from the initial configuration to the final assembly configuration (figure 2).

During screwing, the active wall 62 of the nut 60 influences the ring 40 so as to compress it and reduce its radial dimension, so that the ring enters the assembly seat 22 and is pushed towards the abutment wall 24 of the main body 10.

The substantially sharp edge between the support seat 20 and the assembly seat 22 does not form a guide for insertion of the ring 40, but causes its almost snap insertion.

Furthermore, the foot 44 of the ring 40, interferes with the terminal corrugation of the tube and flattens it against the abutment wall 24 (figure 3), securing the connection between the tube and the coupling.

In the assembly configuration, a portion of the ring 40, and in particular a portion of the main wall 42, projects axially from the assembly seat 22 and from the support seat 20, so as to continue to be in abutment with the active wall 62 of the nut.

In said configuration moreover, the foot 44 is pushed against the abutment wall 24, having a radial extension such that the foot is completely contained radially on the support surface of said abutment wall.

Innovatively, the coupling according to the present invention has been shown to be particularly efficacious for the sealed connection of the tube and the coupling.

Moreover, the coupling according to the present invention has been shown to be particularly convenient for use by assembly technicians in that it permits the connection without excessive effort.

Advantageously moreover the coupling provides an excellent seal between the corrugated tube and the body since the terminal corrugation, which when assembly is completed, remains flattened between the ring and the abutment wall, is substantially flat.

According to a further advantageous aspect, the coupling can be reutilised in that as said the terminal corrugation, after assembly has been completed, is substantially flat and the ring, after dismantling, returns substantially to its original condition. The corrugated tube can then be extracted from the body and together with the ring inserted in a different body.

It is clear that a person skilled in the art may make modifications to the coupling described above so as to satisfy contingent requirements.

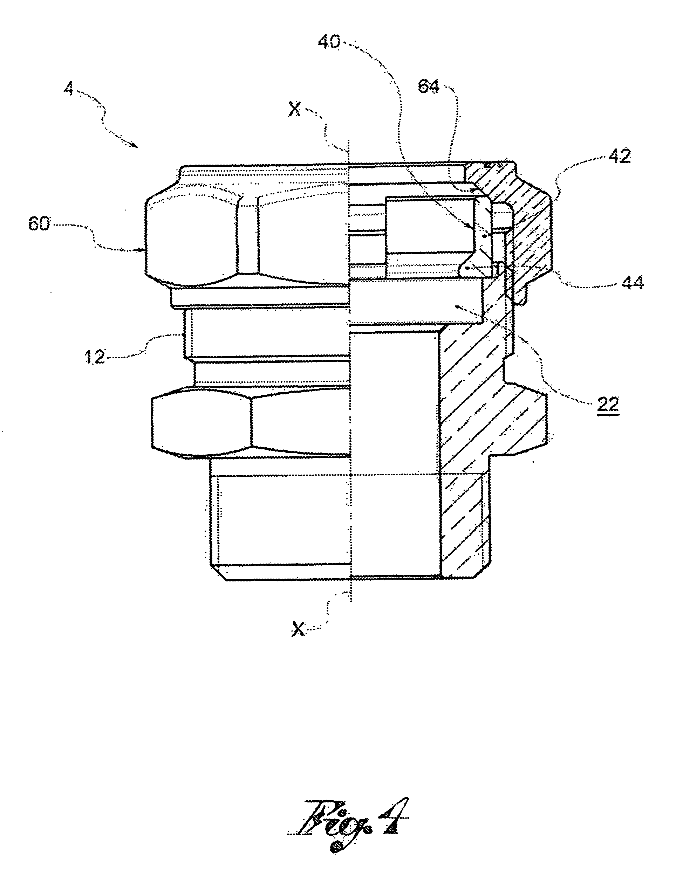

For example, according to one embodiment variation (figure 4), the main body externally has on the outside, at the other longitudinal end, a threading for the threaded connection to the utility device.

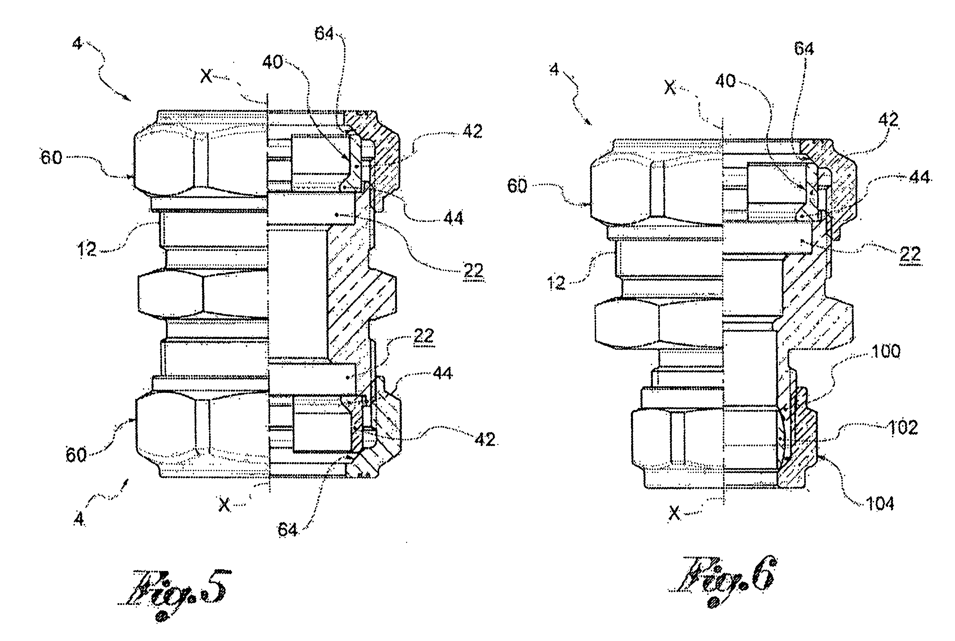

According to a further embodiment variation (figure 5), the main body comprises internally, at the other longitudinal end, a further support seat and a further assembly seat, for engagement with a further cut ring and a further screwable nut, for connection to a further corrugated tube.

According to a further embodiment variation (figure 6), at the other end, the main body has, on the inside, a guide chamfer 100 and the coupling further comprises:
- a deformable ogive 102; and
- a secondary nut 104, which can be screwed to said further end, suitable for pressing the ogive against the guide chamfer 100 to deform it permanently.

Such embodiment is particularly suitable for connection with a copper pipe.

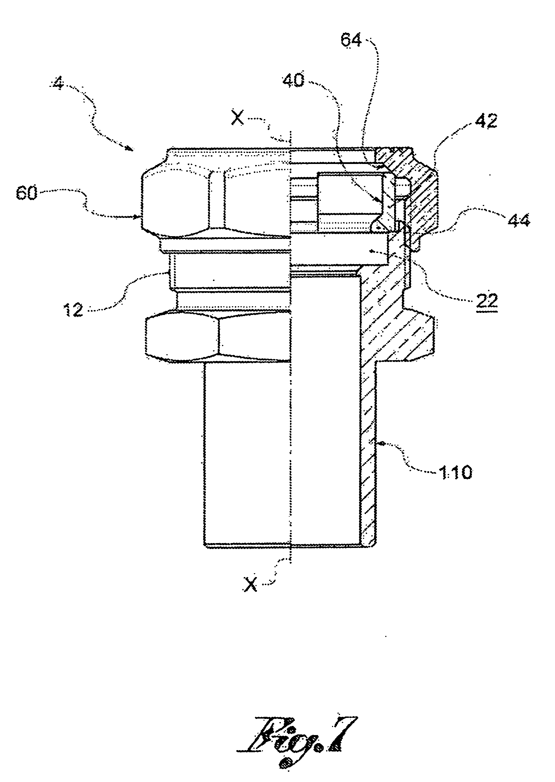

According to yet a further embodiment variation (figure 7), at the other end, the main body comprises an insert 110, smooth on the inside and outside, for insertion in the utility device.

Such variations are also contained within the sphere of protection as defined by the appended claims.

## Claims

1. Coupling (4) for a corrugated tube (2) extending along a longitudinal axis (X), comprising:
- a main body (10) comprising internally, at one longitudinal end:
a) a support seat (20) defined circumferentially by a cylindrical surface and defined on the bottom by a crown-shaped support surface (20');
b) an assembly seat (22), adjacent to the support seat (20) having a smaller inner diameter than that of the support seat, defined on the bottom by an abutment wall (24) having a radial extension, destined to abut with the end of the tube inserted in said main body;
- a cut ring (40), suitable to be restricted in dimension from an initial non-deformed rest configuration, in which it abuts with the support surface (20') of the support seat (20) of the main body and a deformed assembly configuration in which it is at least partially housed in the assembly seat (22) of the main body
- a nut (60) which can be screwed onto the main body (10), fitted internally with an at least partially tapered active wall (62) to narrow the ring during screwing of the nut to the main body,
wherein the ring (40) comprises a main body (42), defined by cylindrical surfaces inwardly and outwardly, in contact with the active wall (62) of the nut (60) and an annular foot (44) abutting with the crown-shaped support surface (20') of the main body (10) in the initial non-deformed configuration of the ring (40).

2. Coupling according to claim 1, wherein the foot (44) has internally, an at least partially tapered guide surface for the insertion of the tube.

3. Coupling according to any of the previous claims, wherein, in said deformed assembly configuration, the foot (44) of the ring (40) is completely contained radially on the support surface of said abutment wall (24).

4. Coupling according to any of the previous claims, wherein the main body is made in a single piece, for example in brass.

5. Coupling according to any of the previous claims, wherein the ring has a slit through its thickness and from one end to the other, to give said structural flexibility.

6. Coupling according to any of the previous claims, wherein the ring is made in a single piece, for example in brass.

7. Coupling according to any of the previous claims, wherein the nut is made in a single piece, for example in brass.

8. Coupling according to any of the previous claims, wherein the passage from the support seat (20) to the assembly seat (22) is defined circumferentially by a substantially sharp edge.

9. Coupling according to any of the previous claims, wherein the support foot (44) ends with a substantially sharp edge.

10. Coupling according to any of the previous claims, wherein the main body is fitted with an outer threaded portion (12) for screwing the nut (60) onto.

11. Coupling according to any of the previous claims, wherein, on the side opposite the ring (40), the main body is fitted with an outer threaded portion (12) for screwing to the utility device.

12. Coupling according to any of the previous claims, wherein, on the side opposite the ring (40), the main body is fitted with an inner threaded portion (28) for screwing to the utility device.

13. Coupling according to any of the claims from 1 to 10, wherein the main body comprises internally, at the other longitudinal end, a further support seat and a further assembly seat, for engagement with a further cut ring and a further screwable nut, for connection to a further corrugated tube.

14. Coupling according to any of the claims from 1 to 10, wherein, at the other end the main body has, on the inside, a guide chamfer (100), said coupling further comprising:
- a deformable ogive (102); and
- a secondary nut (104), which can be screwed to said further end, suitable for pressing the ogive against the guide chamfer (100) to deform it permanently;
for connection, for example, to a copper pipe.

15. Coupling according to any of the claims from 1 to 10, wherein at the other end, the main body comprises an insert (110), smooth on the inside and outside, for insertion in the utility device.

## Patentansprüche

1. Kopplung (4) für ein Faltrohr (2), die sich entlang einer Längsachse (X) erstreckt, umfassend:
- einen Hauptkörper (10), der innen an einem Längsende umfasst:
a) einen umfangmäßig durch eine zylindrische Fläche und am Boden durch eine kronenförmige Stützfläche (20') begrenzten Stützsitz (20);
b) einen Montagesitz (22) benachbart zu dem Stützsitz (20) mit einem geringeren inneren Durchmesser als demjenigen des Stützsitzes, am Boden begrenzt durch eine Anlagewand (24) mit einer radialen Abmessung, die dazu geeignet ist, am Ende des in dem Hauptkörper eingeführten Rohrs in Anlage zu kommen;
- einen Schneidring (40), der dazu geeignet ist, in seinen Abmessungen von einer ursprünglichen nicht verformten Ruhekonfiguration, in welcher er mit der Stützfläche (20') des Stützsitzes (20) des Hauptkörpers in Anlage kommt und einer verformten Montagekonfiguration, in welcher er wenigstens teilweise in dem Montagesitz (22) des Hauptkörpers aufgenommen ist, verringert zu werden;
- eine Mutter (60), die auf den Hauptkörper (10) aufgeschraubt werden kann und innen mit einer sich wenigstens teilweise verjüngenden aktiven Wand (62) ausgestattet ist, um den Ring während des Aufschraubens der Mutter auf den Hauptkörper zu verengen, wobei der Ring (40) einen Hauptkörper (42) umfasst, der einwärts und auswärts durch zylindrische Flächen begrenzt ist, in Berührung mit der aktiven Wand (62) der Mutter (60) und einen ringförmigen Fuß (44) umfasst, der mit der kronenförmigen Stützfläche (20') des Hauptkörpers (10) in der anfänglichen nicht verformten Konfiguration des Rings (40) in Anlage kommt.

2. Kopplung nach Anspruch 1, wobei der Fuß (44) innen eine sich wenigstens teilweise verjüngende Führungsfläche zum Einführen des Rohrs umfasst.

3. Kopplung nach einem der vorangehenden Ansprüche, wobei in der verformten Montagekonfiguration der Fuß (44) des Rings (40) vollständig radial an der Stützfläche der Anlagewand (24) gehalten ist.

4. Kopplung nach einem der vorangehenden Ansprüche, wobei der Hauptkörper aus einem einzigen Stück gefertigt ist, beispielsweise aus Messing.

5. Kopplung nach einem der vorangehenden Ansprüche, wobei der Ring einen Schlitz durch seine Dicke hindurch und von einem Ende zum anderen aufweist, um strukturelle Flexibilität zu bieten.

6. Kopplung nach einem der vorangehenden Ansprüche, wobei der Ring aus einem einzigen Stück gefertigt ist, beispielsweise aus Messing.

7. Kopplung nach einem der vorangehenden Ansprüche, wobei die Mutter aus einem einzigen Stück gefertigt ist, beispielsweise aus Messing.

8. Kopplung nach einem der vorangehenden Ansprüche, wobei der Durchlass vom Stützsitz (20) zum Montagesitz (22) umfangmäßig durch eine im Wesentlichen scharfe Kante begrenzt ist.

9. Kopplung nach einem der vorangehenden Ansprüche, wobei der Stützfuß (44) mit einer im Wesentlichen scharfen Kante endet.

10. Kopplung nach einem der vorangehenden Ansprüche, wobei der Hauptkörper mit einem Außengewindeabschnitt (12) zum Aufschrauben der Mutter (60) ausgestattet ist.

11. Kopplung nach einem der vorangehenden Ansprüche, wobei der Hauptkörper auf der dem Ring (40) gegenüberliegenden Seite mit einem Außengewindeabschnitt (12) zum Anschrauben an das Nutzgerät ausgestattet ist.

12. Kopplung nach einem der vorangehenden Ansprüche, wobei der Hauptkörper auf der dem Ring (40) gegenüberliegenden Seite mit einem Innengewindeabschnitt (28) zum Anschrauben an das Nutzgerät ausgestattet ist.

13. Kopplung nach einem der Ansprüche 1 bis 10, wobei der Hauptkörper innen am anderen Längsende einen weiteren Stützsitz und einen weiteren Montagesitz für den Eingriff mit einem weiteren Schneidring und einer weiteren aufschraubbaren Mutter für die Verbindung mit einem weiteren Faltrohr umfasst.

14. Kopplung nach einem der Ansprüche 1 bis 10, wobei der Hauptkörper am anderen Ende an der Innenseite eine Führungsschräge (100) umfasst, wobei die Kopplung ferner umfasst:
- einen verformbaren Spitzbogen (102); und
- eine Sekundärmutter (104), welche an das weitere Ende angeschraubt werden kann und dazu geeignet ist, den Spitzbogen gegen die Führungsschiene (100) zu drücken, um diese permanent zu verformen,
zur Verbindung mit z.B. einem Kupferrohr.

15. Kopplung nach einem der Ansprüche 1 bis 10, wobei der Hauptkörper am anderen Ende ein Einsatzstück (110) zum Einführen in das Nutzgerät umfasst, das an der Innenseite und Außenseite glatt ist.

## Revendications

1. Couplage (4) pour un tube ondulé (2) s'étendant le long d'un axe longitudinal (X), comprenant :
- un corps principal (10) comprenant intérieurement, au niveau d'une extrémité longitudinale :
a) un siège de support (20) défini de manière circonférentielle par une surface cylindrique et défini au fond par une surface de support en forme de couronne (20') ;
b) un siège de montage (22), adjacent au siège de support (20) ayant un plus petit diamètre interne que celui du siège de support, défini au fond par une paroi de butée (24) ayant une extension radiale, destinée à venir en butée avec l'extrémité du tube inséré dans ledit corps principal ;
- un anneau coupé (40), approprié pour être limité en dimension d'une configuration de repos non déformée initiale, dans laquelle il vient en butée avec la surface de support (20') du siège de support (20) du corps principal et une configuration d'assemblage déformée dans laquelle il est au moins partiellement logé dans le siège de montage (22) du corps principal ;
- un écrou (60) qui peut être vissé sur le corps principal (10), doté intérieurement d'une paroi active au moins partiellement progressivement rétrécie (62) pour rétrécir l'anneau pendant le vissage de l'écrou sur le corps principal,
dans lequel l'anneau (40) comprend un corps principal (42), défini par des surfaces cylindriques vers l'intérieur et vers l'extérieur, en contact avec la paroi active (62) de l'écrou (60) et un pied annulaire (44) venant en butée avec la surface de butée (20') du corps principal (10) dans la configuration non déformée initiale de l'anneau (40).

2. Couplage selon la revendication 1, dans lequel le pied (44) a intérieurement, au moins une surface de guidage partiellement progressivement rétrécie pour l'insertion du tube.

3. Couplage selon l'une quelconque des revendications précédentes, dans lequel, dans ladite configuration d'assemblage déformée, le pied (44) de l'anneau (40) est complètement contenu radialement sur la surface de support de ladite paroi de butée (24).

4. Couplage selon l'une quelconque des revendications précédentes, dans lequel le corps principal est réalisé d'un seul tenant, par exemple en laiton.

5. Couplage selon l'une quelconque des revendications précédentes, dans lequel l'anneau a une fente dans son épaisseur et d'une extrémité à l'autre, pour donner ladite flexibilité structurelle.

6. Couplage selon l'une quelconque des revendications précédentes, dans lequel l'anneau est réalisé d'un seul tenant, par exemple en laiton.

7. Couplage selon l'une quelconque des revendications précédentes, dans lequel l'écrou est réalisé d'un seul tenant, par exemple en laiton.

8. Couplage selon l'une quelconque des revendications précédentes, dans lequel le passage du siège de support (20) au siège de montage (22) est défini de manière circonférentielle par un bord sensiblement tranchant.

9. Couplage selon l'une quelconque des revendications précédentes, dans lequel le pied de support (44) se termine avec un bord sensiblement tranchant.

10. Couplage selon l'une quelconque des revendications précédentes, dans lequel le corps principal est équipé avec une partie filetée externe (12) pour y visser l'écrou (60).

11. Couplage selon l'une quelconque des revendications précédentes, dans lequel, sur le côté opposé à l'anneau (40), le corps principal est doté d'une partie filetée externe (12) pour le vissage sur le dispositif utilitaire.

12. Couplage selon l'une quelconque des revendications précédentes, dans lequel, sur le côté opposé à l'anneau (40), le corps principal est doté d'une partie filetée interne (28) pour le vissage sur le dispositif utilitaire.

13. Couplage selon l'une quelconque des revendications 1 à 10, dans lequel le corps principal comprend intérieurement, au niveau de l'autre extrémité longitudinale, un autre siège de support et un autre siège de montage, pour la mise en prise avec un autre anneau découpé et un autre écrou vissable, pour le raccordement à un autre tube ondulé.

14. Couplage selon l'une quelconque des revendications 1 à 10, dans lequel, au niveau de l'autre extrémité, le corps principal a, à l'intérieur, un chanfrein de guidage (100), ledit couplage comprenant en outre :
- une ogive déformable (102) ; et
- un écrou secondaire (104) qui peut être vissé sur ladite extrémité supplémentaire, approprié pour comprimer l'ogive contre le chanfrein de guidage (100) afin de la déformer de manière permanente ;
pour le raccordement, par exemple, à un tuyau en cuivre.

15. Couplage selon l'une quelconque des revendications 1 à 10, dans lequel, au niveau de l'autre extrémité, le corps principal comprend un insert (110), lisse à l'intérieur et à l'extérieur, pour l'insertion dans le dispositif utilitaire.
